# EUROPEAN PATENT SPECIFICATION

(11) **EP 1 120 001 B1**
(45) Date of publication and mention of the grant of the patent: **22.06.2011**
(21) Application number: 99956451.1
(22) Date of filing: 08.10.1999
(51) Int. Cl.: H04W 36/06, H04W 72/04

(54) **CHANNEL REASSIGNMENT IN A MOBILE RADIO COMMUNICATION SYSTEM**
KANALWIEDERZUWEISUNG IN EINEM MOBILFUNKKOMMUNIKATIONSSYSTEM
REAFFECTATION DE CANAUX DANS UN SYSTEME DE RADIOCOMMUNICATIONS MOBILES

(30) Priority: 09.10.1998 US 103601 P; 15.12.1998 US 210595
(43) Date of publication of application: 01.08.2001
(73) Proprietor: Telefonaktiebolaget L M Ericsson (publ), 164 83 Stockholm (SE)
(72) Inventor: DIACHINA, John, Walter, Garner, NC 27529 (US); LINDSKOG, Jan, S-435 43 Pixbo (SE); RYDNELL, Gunnar, S-430 65 Rävlanda (SE)
(74) Representative: Åkerman, Mårten Lennart
(86) International application number: PCT/SE1999/001820
(87) International publication number: WO 2000/022867

(56) References cited:
- EP-A- 0 471 656
- EP-A- 0 695 053
- EP-A- 0 746 172
- WO-A-95/12935
- US-A- 5 530 693

## Description

### BACKGROUND

The present invention relates generally to radio communication systems and, more particularly, to a technique for confirming the receipt of Channel Reassignment messages in mobile originated and mobile terminated data transfers.

In North America, digital communication and multiple access techniques such as TDMA are currently provided by a digital cellular radiotelephone system called the digital advanced mobile phone service (D-AMPS), some of the characteristics of which are specified in the interim standard TIA/EIA/IS-54, "Dual-Mode Mobile Station-Base Station Compatibility Standard", published by the Telecommunications Industry Association and Electronic Industries Association (TIA/EIA).
Because of a large existing consumer base of equipment operating only in the analog domain with frequency-division multiple access (FDMA), TIA/EIA/IS-54 is a dual-mode (analog and digital) standard, providing for analog compatibility together with digital communication capability. For example, the TIA/EIA/IS-54 standard provides for both FDMA analog voice channels (AVC) and TDMA digital traffic channels (DTC). The AVCs and DTCs are implemented by frequency modulating radio carrier signals, which have frequencies near 800 megahertz (MHz) such that each radio channel has a spectral width of 30 kilohertz (KHz).

In a TDMA cellular radiotelephone system, each radio channel is divided into a series of time slots, each of which contains a burst of information from a data source, e.g., a digitally encoded portion of a voice conversation. The time slots are grouped into successive TDMA frames having a predetermined duration. The number of time slots in each TDMA frame is related to the number of different users that can simultaneously share the radio channel. If each slot in a TDMA frame is assigned to a different user, the duration of a TDMA frame is the minimum amount of time between successive time slots assigned to the same user.

The successive time slots assigned to the same user, which are usually not consecutive time slots on the radio carrier, constitute the user's digital traffic channel, which may be considered a logical channel assigned to the user. As described in more detail below, digital control channels (DCCHs) can also be provided for communicating control signals, and such a DCCH is a logical channel formed by a succession of usually non-consecutive time slots on the radio carrier.

In only one of many possible embodiments of a TDMA system as described above, the TIA/EIA/IS-54 standard provided that each TDMA frame consists of six consecutive time slots and has a duration of 40 milliseconds (msec). Thus, each radio channel can carry from three to six DTCs (e.g., three to six telephone conversations), depending on the source rates of the speech coder/decoders (codecs) used to digitally encode the conversations. Such speech codecs can operate at either full-rate or half-rate. A full-rate DTC requires twice as many time slots in a given time period as a half-rate DTC, and in TIA/EIA/IS-54, each full-rate DTC uses two slots of each TDMA frame, i.e., the first and fourth, second and fifth, or third and sixth of a TDMA frame's six slots. Each half-rate DTC uses one time slot of each TDMA frame. During each DTC time slot, 324 bits are transmitted, of which the major portion, 260 bits, is due to the speech output of the codec, including bits due to error correction coding of the speech output, and the remaining bits are used for guard times and overhead signalling for purposes such as synchronization.

It can be seen that the TDMA cellular system operates in a buffer-and-burst, or discontinuous-transmission, mode: each mobile station transmits (and receives) only during its assigned time slots. At full rate, for example, a mobile station might transmit during slot 1, receive during slot 2, idle during slot 3, transmit during slot 4, receive during slot 5, and idle during slot 6, and then repeat the cycle during succeeding TDMA frames. Therefore, the mobile station, which may be battery-powered, can be switched off, or sleep, to save power during the time slots when it is neither transmitting nor receiving.

In addition to voice or traffic channels, cellular radio communication systems also provide paging/access, or control, channels for carrying call-setup messages between base stations and mobile stations. According to TIA/EIA/IS-54, for example, there are twenty-one dedicated analog control channels (ACCs), which have predetermined fixed frequencies for transmission and reception located near 800 MHZ. Since these ACCs are always found at the same frequencies, they can be readily located and monitored by the mobile stations.

For example, when in an idle state (i.e., switched on but not making or receiving a call), a mobile station in a TIA/EIA/IS-54 system tunes to and then regularly monitors the strongest control channel (generally, the control channel of the cell in which the mobile station is located at that moment) and may receive or initiate a call through the corresponding base station. When moving between cells while in the idle state, the mobile station will eventually "lose" radio connection on the control channel of the "old" cell and tune to the control channel of the "new" cell. The initial tuning and subsequent re-tuning to control channels are both accomplished automatically by scanning all the available control channels at their known frequencies to find the "best" control channel. When a control channel with good reception quality is found, the mobile station remains tuned to this channel until the quality deteriorates again. In this way, mobile stations stay "in touch" with the system.

While in the idle state, a mobile station must monitor the control channel for paging messages addressed to it. For example, when an ordinary telephone (land-line) subscriber calls a mobile subscriber, the call is directed from the public switched telephone network (PSTN) to a mobile switching center (MSC) that analyzes the dialed number. If the dialed number is validated, the MSC requests some or all of a number of radio base stations to page the called mobile station by transmitting over their respective control channels paging messages that contain the mobile identification number (MIN) of the called mobile station. Each idle mobile station receiving a paging message compares the received MIN with its own stored MIN. The mobile station with the matching stored MIN transmits a page response over the particular control channel to the base station, which forwards the page response to the MSC.

Upon receiving the page response, the MSC selects an AVC or a DTC available to the base station that received the page response, switches on a corresponding radio transceiver in that base station, and causes that base station to send a message via the control channel to the called mobile station that instructs the called mobile station to tune to the selected voice or traffic channel. A through-connection for the call is established once the mobile station has tuned to the selected AVC or DTC.

The performance of the system having ACCs that is specified by TIA/EIA/IS-54 has been improved in a system having digital control channels (DCCHs) that is specified in TIA/EIA/IS-136, which is expressly incorporated by reference herein. One example of such a system having DCCHs with new formats and processes is described in U.S. Patent Application No. 07/956,640 entitled "Digital Control Channel", which was filed on October 5, 1992. Using such DCCHs, each TIA/EIA/IS-54 radio channel can carry DTCs only, DCCHs only, or a mixture of both DTCs and DCCHs. Within the TIA/EIA/IS-136 framework, each radio carrier frequency can have up to three full-rate DTCs/DCCHs, or six half-rate DTCs/DCCHs, or any combination in between, for example, one full-rate and four half-rate DTCs/DCCHs.

In general, however, the transmission rate of the DCCH need not coincide with the half-rate and full-rate specified in TIA/EIA/IS-54, and the length of the DCCH slots may not be uniform and may not coincide with the length of the DTC slots. The DCCH may be defined on an TIA/EIA/IS-54 radio channel and may consist, for example, of every n-th slot in the stream of consecutive TDMA slots. In this case, the length of each DCCH slot may or may not be equal to 6.67 msec, which is the length of a DTC slot according to TIA/EIA/IS-54. Alternatively (and without limitation on other possible alternatives), these DCCH slots may be defined in other ways known to one skilled in the art.

In cellular telephone systems, an air link protocol is required in order to allow a mobile station to communicate with the base stations and MSC. The communications link protocol is used to initiate and to receive cellular telephone calls. As described in U.S. Patent Application No. 08/477,574 entitled "Layer 2 Protocol for the Random Access Channel and the Access Response Channel," which was filed on June 7, 1995, the communications link protocol is commonly referred to within the communications industry as a Layer 2 protocol, and its functionality includes the delimiting, or framing, of Layer 3 messages. These Layer 3 messages may be sent between communicating Layer 3 peer entities residing within mobile stations and cellular switching systems. The physical layer (Layer 1) defines the parameters of the physical communications channel, e.g., radio frequency spacing, modulation characteristics, etc. Layer 2 defines the techniques necessary for the accurate transmission of information within the constraints of the physical channel, e.g., error correction and detection, etc. Layer 3 defines the procedures for reception and processing of information transmitted over the physical channel.

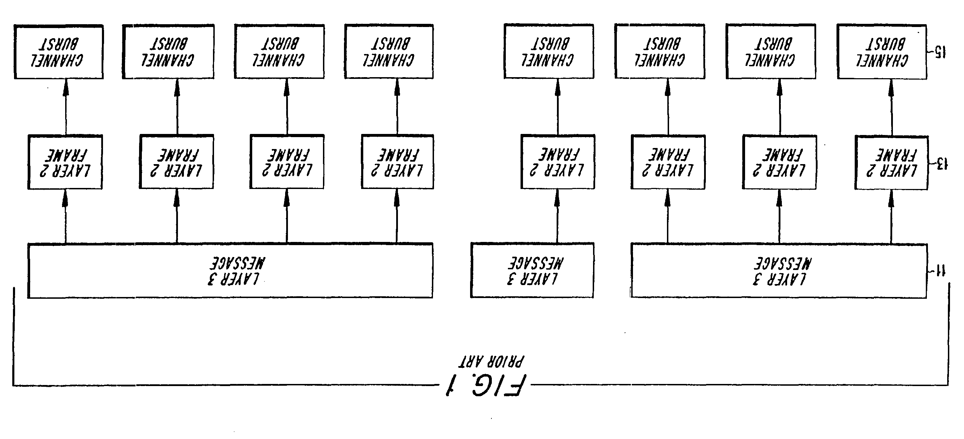

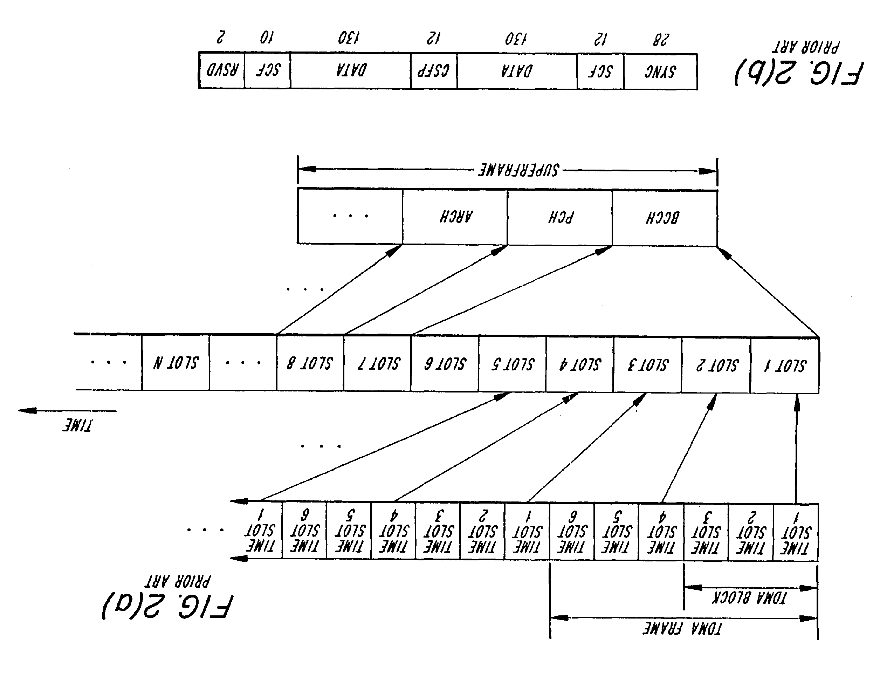

Communications between mobile stations and the cellular switching system (the base stations and the MSC) can be described in general with reference to Figures 1 and 2. Figure 1 schematically illustrates pluralities of Layer 3 messages 11, Layer 2 frames 13, and Layer 1 channel bursts, or time slots, 15. In Figure 1, each group of channel bursts corresponding to each Layer 3 message may constitute a logical channel, and as described above, the channel bursts for a given Layer 3 message would usually not be consecutive slots on an TIA/EIA/136 carrier. On the other hand, the channel bursts could be consecutive; as soon as one time slot ends, the next time slot could begin.

Each Layer 1 channel burst 15 contains a complete Layer 2 frame as well as other information such as, for example, error correction information and other overhead information used for Layer 1 operation. Each Layer 2 frame contains at least a portion of a Layer 3 message as well as overhead information used for Layer 2 operation. Although not indicated in Figure 1, each Layer 3 message would include various information elements that can be considered the payload of the message, a header portion for identifying the respective message's type, and possibly padding.

Each Layer 1 burst and each Layer 2 frame is divided into a plurality of different fields. In particular, a limited-length DATA field in each Layer 2 frame contains the Layer 3 message 11. Since Layer 3 messages have variable lengths depending upon the amount of information contained in the Layer 3 message, a plurality of Layer 2 frames may be needed for transmission of a single Layer 3 message. As a result, a plurality of Layer 1 channel bursts may also be needed to transmit the entire Layer 3 message as there is a one-to-one correspondence between channel bursts and Layer 2 frames.

As noted above, when more than one channel burst is required to send a Layer 3 message, the several bursts are not usually consecutive bursts on the radio channel. Moreover, the several bursts are not even usually successive bursts devoted to the particular logical channel used for carrying the Layer 3 message. Since time is required to receive, process, and react to each received burst, the bursts required for transmission of a Layer 3 message are usually sent in a staggered format, as schematically illustrated in Figure 2(a) and as described above in connection with the TIA/EIA/IS-136 standard.

Figure 2(a) shows a general example of a forward (or downlink) DCCH configured as a succession of time slots 1, 2, ... , N, ... included in the consecutive time slots 1, 2, ... sent on a carrier frequency. These DCCH slots may be defined on a radio channel such as that specified by TIA/EIA/IS-136, and may consist, as seen in Figure 2(a) for example, of every n-th slot in a series of consecutive slots. Each DCCH slot has a duration that may or may not be 6.67 msec, which is the length of a DTC slot according to the TIA/EIA/IS-136 standard.

As shown in Figure 2(a), the DCCH slots may be organized into superframes (SF), and each superframe includes a number of logical channels that carry different kinds of information. One or more DCCH slots may be allocated to each logical channel in the superframe. The exemplary downlink superframe in Figure 2(a) includes three logical channels: a broadcast control channel (BCCH) including six successive slots for overhead messages; a paging channel (PCH) including one slot for paging messages; and an access response channel (ARCH) including one slot for channel assignment and other messages. The remaining time slots in the exemplary superframe of Figure 2 may be dedicated to other logical channels, such as additional paging channels PCH or other channels. Since the number of mobile stations is usually much greater than the number of slots in the superframe, each paging slot is used for paging several mobile stations that share some unique characteristic, e.g., the last digit of the MIN.

Figure 2(b) illustrates an exemplary information format for the slots of a forward DCCH. Figure 2(b) indicates the number of bits in each field above that field. The bits sent in the SYNC information are used in a conventional way to help ensure accurate reception of the coded superframe phase (CSFP) and DATA fields. The SYNC information carries a predetermined bit pattern used by the base stations to find the start of the slot. The shared channel feedback (SCF) information is used to control a random access channel (RACH), which is used by the mobile to request access to the system. The CSFP information conveys a coded superframe phase value that enables the mobile stations to find the start of each superframe. This is just one example for the information format in the slots of the forward DCCH.

For purposes of efficient sleep mode operation and fast cell selection, the BCCH may be divided into a number of sub-channels. U.S. Patent Application No. 07/956,640 discloses a BCCH structure that allows the mobile station to read a minimum amount of information when it is switched on (when it locks onto a DCCH) before being able to access the system (place or receive a call). After being switched on, an idle mobile station needs to regularly monitor only its assigned PCH slots (usually one in each superframe); the mobile can sleep during other slots. The ratio of the mobile's time spent reading paging messages and its time spent asleep is controllable and represents a tradeoff between call-set-up delay and power consumption.

Since each TDMA time slot has a certain fixed information carrying capacity, each burst typically carries only a portion of a Layer 3 message as noted above. In the uplink direction, multiple mobile stations attempt to communicate with the system on a contention basis, while multiple mobile stations listen for Layer 3 messages sent from the system in the downlink direction. In known systems, any given Layer 3 message is carried using as many TDMA channel bursts as required to send the entire Layer 3 message.

Digital control and traffic channels are desirable for these and other reasons described in U.S. Patent Application No. 08/147,254, entitled "A Method for Communicating in a Wireless Communication System", which was filed on November 1, 1993. For example, they support longer sleep periods for the mobile units, which results in longer battery life.

The systems specified by the TIA/EIA/IS-54 and TIA/EIA/IS-136 standards are circuit-switched technology, which is a type of "connection-oriented" communication that establishes a physical call connection and maintains that connection for as long as the communicating end-systems have data to exchange. The direct connection of a circuit switch serves as an open pipeline, permitting the end-systems to use the circuit for whatever they deem appropriate. While circuit-switched data communication may be well suited to constant-bandwidth applications, it is relatively inefficient for low-bandwidth and "bursty" applications.

Packet-switched technology, which may be connection-oriented (e.g., X.25) or "connectionless" (e.g., the Internet Protocol, "IP"), does not require the set-up and tear-down of a physical connection, which is in marked contrast to circuit-switched technology. This reduces the data latency and increases the efficiency of a channel in handling relatively short, bursty, or interactive transactions. A connectionless packet-switched network distributes the routing functions to multiple routing sites, thereby avoiding possible traffic bottlenecks that could occur when using a central switching hub. Data is "packetized" with the appropriate end-system addressing and then transmitted in independent units along the data path. Intermediate systems, sometimes called "routers", stationed between the communicating end-systems make decisions about the most appropriate route to take on a per packet basis. Routing decisions are based on a number of characteristics, including: least-cost route or cost metric; capacity of the link; number of packets waiting for transmission; security requirements for the link; and intermediate system (node) operational status.

Packet transmission along a route that takes into consideration path metrics, as opposed to a single circuit set up, offers application and communications flexibility. It is also how most standard local area networks (LANs) and wide area networks (WANs) have evolved in the corporate environment. Packet switching is appropriate for data communications because many of the applications and devices used, such as keyboard terminals, are interactive and transmit data in bursts. Instead of a channel being idle while a user inputs more data into the terminal or pauses to think about a problem, packet switching interleaves multiple transmissions from several terminals onto the channel.

Packet data provides more network robustness due to path independence and the routers' ability to select alternative paths in the event of network node failure. Packet switching, therefore, allows for more efficient use of the network lines. Packet technology offers the option of billing the end user based on amount of data transmitted instead of connection time. If the end user's application has been designed to make efficient use of the air link, then the number of packets transmitted will be minimal. If each individual user's traffic is held to a minimum, then the service provider has effectively increased network capacity.

Packet networks are usually designed and based on industry-wide data standards such as the open system interface (OSI) model or the TCP/IP protocol stack. These standards have been developed, whether formally or de facto, for many years, and the applications that use these protocols are readily available. The main objective of standards-based networks is to achieve interconnectivity with other networks. The Internet is today's most obvious example of such a standards-based network pursuit of this goal.

Packet networks, like the Internet or a corporate LAN, are integral parts of today's business and communications environments. As mobile computing becomes pervasive in these environments, wireless service providers such as those using TIA/EIA/IS-136 are best positioned to provide access to these networks. Nevertheless, the data services provided by or proposed for cellular systems are generally based on the circuit-switched mode of operation, using a dedicated radio channel for each active mobile user.

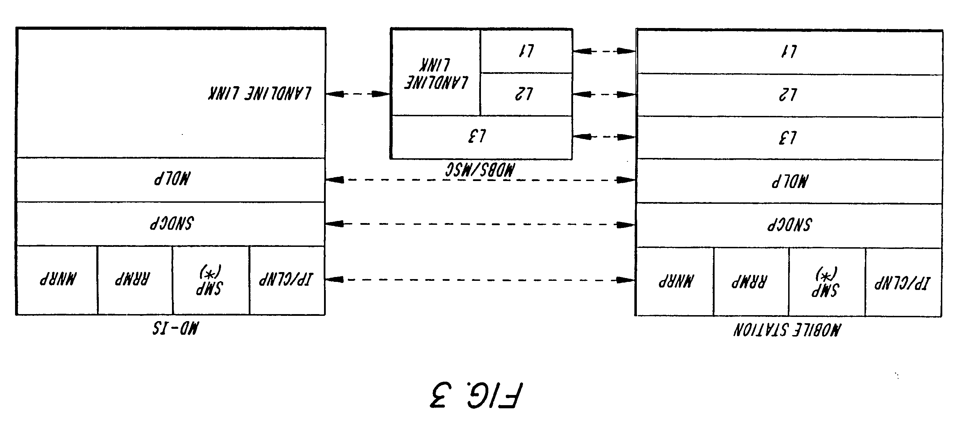

Figure 3 shows representative architecture used for communicating across an air link that comprises the protocols which provide connectivity between a mobile end system (M-ES), a mobile data base station (MDBS), and a mobile data intermediate system (MD-IS). An exemplary description of the elements in Figure 3 and a recommended approach for each element when considering alternative RF technologies follows.

The Internet Protocol/Connectionless Network Protocol (IP/CLNP) are network protocols that are connectionless and widely supported throughout the traditional data network community. These protocols are independent of the physical layer and preferably are not modified as the RF technologies change.

The Security Management Protocol (SMP) provides security services across the air link interface. The services furnished include data link confidentiality, M-ES authentication, key management, access control, and algorithm upgradability/replacement. The SMP should remain unchanged when implementing alternative RF technologies.

The Radio Resource Management Protocol (RRMP) provides management and control over the mobile unit's use of the RF resources. The RRMP and its associated procedures are specific to the AMPS RF infrastructure and require change based on the RF technology implemented.

The Mobile Network Registration Protocol (MNRP) is used in tandem with a Mobile Network Location Protocol (MNLP) to allow proper registration and authentication of the mobile end system. The MNRP should be unchanged when using alternative RF technologies.

The Mobile Data Link Protocol (MDLP) provides efficient data transfer between the MD-IS and the M-ES. The MDLP supports efficient mobile system movement, mobile system power conservation, RF channel resources sharing, and efficient error recovery. The MDLP should be unchanged when using alternative RF technologies.

The Medium Access Control (MAC) protocol and associated procedures control the methodology M-ESs use to manage shared access to the RF channel. This protocol and its functionality must be supplied by alternative RF technologies.

A few exceptions to data services for cellular systems based on the circuit-switched mode of operation are described in the following documents, which include the packet data concepts.

U.S. Patent No. 4,887,265 and "Packet Switching in Digital Cellular Systems", Proc. 38th IEEE Vehicular Technology Conf., pp. 414-418 (June 1988) describe a cellular system providing shared packet data radio channels, each one capable of accommodating multiple data calls. A mobile station requesting packet data service is assigned to a particular packet data channel using essentially regular cellular signalling. The system may include packet access points (PAPS) for interfacing with packet data networks. Each packet data radio channel is connected to one particular PAP and is thus capable of multiplexing data calls associated with that PAP. Handovers are initiated by the system in a manner that is largely similar to the handover used in the same system for voice calls. A new type of handover is added for those situations when the capacity of a packet channel is insufficient.

These documents are data-call oriented and based on using system-initiated handover in a similar way as for regular voice calls. Applying these principles for providing general purpose packet data services in a TDMA cellular system would result in spectrum inefficiency and performance disadvantages.

U.S. Patent No. 4,916,691 describes a new packet mode cellular radio system architecture and a new procedure for routing (voice and/or data) packets to a mobile station. Base stations, public switches via trunk interface units, and a cellular control unit are linked together via a WAN. The routing procedure is based on mobile station-initiated handovers and on adding to the header of any packet transmitted from a mobile station (during a call) an identifier of the base station through which the packet passes. In case of an extended period of time between subsequent user information packets from a mobile station, the mobile station may transmit extra control packets for the purpose of conveying cell location information.

The cellular control unit is primarily involved at call establishment, when it assigns to the call a call control number. It then notifies the mobile station of the call control number and the trunk interface unit of the call control number and the identifier of the initial base station. During a call, packets are then routed directly between the trunk interface unit and the currently serving base station.

The system described in U.S. Patent No. 4,916,691 is not directly related to the specific problems of providing packet data services in TDMA cellular systems.

In US 5 530 693 a packet data communication system is disclosed that includes a packet data routing network and a plurality of base sites and employs a method and apparatus for providing packet data to a communication unit. The packet data routing network provides a packet of data to at least two of the base sites, one of the base sites being the site currently serving the communication unit and the other base site or sites being possible handoff targets. The serving base site transmits at least a first portion of the packet to the communication unit and the communication unit receives the transmitted packet or portion thereof. However, if during transmission of the packet the communication unit requires a handoff to one of the target base sites, the communication unit transmits an acknowledgement message to the target base site indicating receipt of the first portion of the packet. Upon receipt of the acknowledgement message, the target base site transmits at least a second portion of the packet to the communication unit.

In EP 0 471 656 a method and apparatus for achieving reliable transmission of signaling messages in a cellular system is disclosed, in which the frequency plan, the frequency/time slot allocation plan, code channel allocation plan, or dynamic/adaptive channel allocation rule of the system is violated by allowing adjacent base stations to reuse particular frequencies/time slots/channels for signaling a particular mobile station. In situations where signaling messages, such as handoff commands, which are communicated between a base station and a mobile station, are not properly received by the mobile station, an alternate communications channel will be established to ensure the reception of these messages. The alternate channel is provided by repeating the message through a channel associated with a base station which has better radio characteristics. The channel selected for transmission of the message by the new base station will be on the same frequency/time slot/code as used by the established connection.

"Packet Radio in GSM", European Telecommunications Standards Institute (ETSI) T Doc SMG 4 58/93 (Feb. 12, 1993) and "A General Packet Radio Service Proposed for GSM" presented during a seminar entitled "GSM in a Future Competitive Environment", Helsinki, Finland (Oct. 13, 1993) outline a possible packet access protocol for voice and data in GSM. These documents directly relate to TDMA cellular systems, i.e., GSM, and although they outline a possible organization of an optimized shared packet data channel, they do not deal with the aspects of integrating packet data channels in a total system solution.

"Packet Data over GSM Network", T Doc SMG 1 238/93, ETSI (Sept. 28, 1993) describes a concept of providing packet data services in GSM based on first using regular GSM signalling and authentication to establish a virtual channel between a packet mobile station and an "agent" handling access to packet data services. With regular signalling modified for fast channel setup and release, regular traffic channels are then used for packet transfer. This document directly relates to TDMA cellular systems, but since the concept is based on using a "fast switching version of existing GSM traffic channels, it has disadvantages in terms of spectrum efficiency and packet transfer delays (especially for short messages) compared to a concept based on optimized shared packet data channels.

New standards are currently being settled for integrated voice and packet data services in ANSI-136 systems. A forthcoming version of the standard will provide the ability to create an effective radio resource utilization for the voice and packet data services supplied. One such attempt to provide an effective radio resource for voice and packet data services is described in U.S. Patent No. 5,790,551 to Chan. A dynamic channel assignment technique is disclosed therein where the network provides to a mobile user, in response to a request from the mobile for assignment of a channel on which to transmit data, a particular channel and particular time slots on which the mobile may transmit. As such, no channels are specifically dedicated to data transmissions; rather, the network determines a channel that is free for a specific time period and assigns it to a specific mobile for data transmission. This document does not, however, disclose a method for confirming the reassignment of mobile stations to other channels.

The new ANSI-136 standards will likely support two types of channels for packet data transmissions: a packet control channel (PCCH) and a packet traffic channel (PTCH). The PCCH may be either a point-to-point or point-to-multipoint channel. It is this channel on which a mobile station camps (i.e., where the mobile reads broadcast and paging information and where the mobile has random access and reserved access opportunities). The PTCH, on the other hand, is a point-to-point, reserved access only, channel. As will be appreciated by those skilled in the art, a physical channel can provide either packet data services or voice services or can simultaneously provide both packet data and voice services. Neither broadcast nor paging capabilities are included in the PTCH concept.

A transaction on the above-identified channels starts with the transmission of a Begin frame followed by consecutive Continue frames. A transaction may be "unbounded" (i.e., additional data is appended once the Begin frame is sent to start a transaction) or "bounded" where there is a definite end to the transaction. As one skilled in the art will appreciate, the shortest bounded transaction would include a single Begin frame. Unbounded transactions occur when the amount of data to be sent exceeds a configurable limit. If below the configurable limit, an end is sent explicitly in the Begin frame.

In addition to Begin and Continue frames, administrative packet data units (PDUs) called "Automatic Repeat Request Status frames" or "ARQ Status frames" can be arbitrarily sent. An ARQ Status frame can be sent in the first frame, when no current transaction exists, or embedded in a transaction. The ARQ Status frame is used to convey messages, such as peer data reception status (i.e., the ARQ table) and for sending reassignment messages. As one skilled in the art will appreciate, reassignment messages may also be sent in Begin frames.

Upon activation, a mobile station selects a PCCH on which to camp. If multiple PCCHs exist in a cell, then the mobile station selects one depending, for example, on the mobile station's identification. For instance, if the least significant bits of the mobile station's identification are 00, the mobile station will choose one PCCH; if the least significant bits are 01, it will choose another PCCH, etc. By selecting a PCCH in the above-described manner, paging traffic is spread out over the available PCCHs.

One skilled in the art will appreciate that certain situations may arise in which a mobile station, which is camped on a PCCH, may be requested to tune to another channel. For example, upon a contention-based access from the mobile station or upon receiving mobile termination data from the network, the network may direct the mobile station to transfer (i.e., tune) to a specific PTCH for its packet transmission. Channel Reassignment messages are generally used for notifying a mobile station to make such a transfer. A reassignment message includes information about the new PCCH/PTCH channel and/or whether a mobile station can reuse the existing transaction.

The forthcoming version of the ANSI-136 standard will support Channel Reassignment messages for spreading the traffic load over a cell as well as to redirect GPRS Edge capable mobile stations if supported in the cell. One skilled in the art will appreciate that situations will occur, when off-loading mobiles to an Edge channel, where a Channel Reassignment message will force a mobile station to terminate the current MAC transaction on one channel and restart a new MAC transaction on another channel. Moreover, situations will also occur when off loading takes place from one PCCH to another PCCH, from a PCCH to a PTCH or from a PTCH to another PTCH where the current MAC transaction expects the mobile to appear at the new channel. For such occasions, it is important that the mobile station receives the Channel Reassignment message correctly.

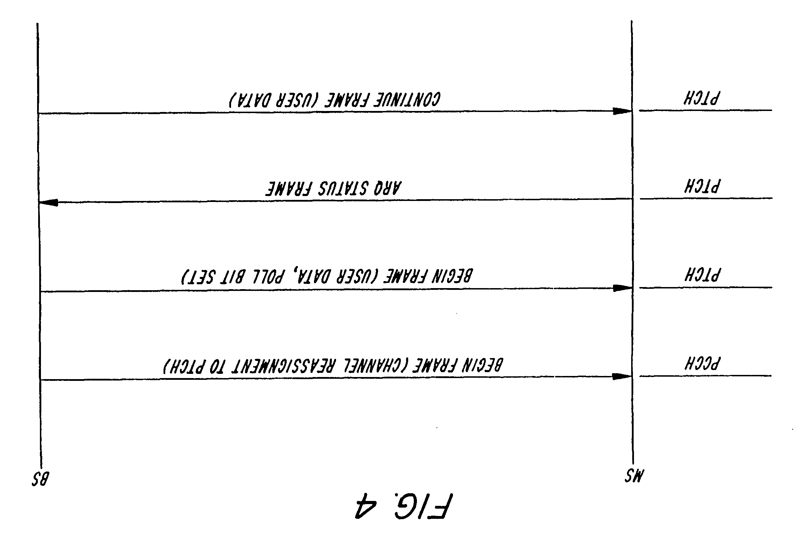

The IS 136 Packet Data MAC Specification, does not, in those situations where Channel Reassignment messages are sent, specify a method for confirming reception of those messages on the same channel on which the reassignment message was sent. Figure 4 illustrates the conventional channel reassignment procedure under the IS 136 Packet Data MAC Specification for a mobile terminated data transaction. In Figure 4, the base station transmits a first Begin frame, which includes a Channel Reassignment message, to the mobile station, which is tuned to a PCCH, in order to instruct the mobile station to tune to a new channel (e.g., a PTCH). In response, the mobile station tunes to the new channel. The base station transmits a second Begin frame on the new channel, which includes user data and a poll bit, which is set to request the mobile station to confirm receipt of the transmission, to the mobile station on the new channel (i.e., the PTCH). The mobile station, in response to receipt of the second Begin frame, transmits an ARQ Status frame which confirms the mobile station's presence on the new channel. The base station then sends additional user data to the mobile station over the new channel.

One skilled in the art will appreciate that if a Channel Reassignment message is sent in order to force a mobile station to tune to an Edge channel, the existing MAC transaction at the PCCH is terminated and a forwarding notification is sent in order to relay incoming data from the network to the Edge MAC entity. The mobile station is expected to tune to the Edge channel and a MAC entity is expected to be created for the duration of the transaction. However, if the mobile station does not receive the Channel Reassignment message, a cumbersome situation occurs. For example, if mobile terminated data is pending at the base station, the Edge MAC entity will send the data on the downlink and, upon no reception from the mobile station, will most likely discard the pending data. Retransmission from the network will be required.

One skilled in the art will further appreciate that if a Channel Reassignment is sent in order to force a mobile station to tune to another PCCH or a PTCH, the base station is expecting traffic to appear on the new channel. In the case of a mobile terminated data transaction, the base station transmits data on the new channel, and upon no reception from the mobile station, the data will be discarded. In the case of a mobile originated data transaction, the mobile station will not be scheduled for an uplink reservation on the old channel since the base station does not expect the mobile station to be on that channel.

Therefore, there exists a need for a method of verifying whether a mobile station has received control messages, e.g., a Channel Reassignment message.

### SUMMARY

The present invention is defined by the independent claims.

The present invention seeks to overcome the above-identified deficiencies by providing a reassignment handshake method for verifying a mobile station's reception of control messages so as not to remove, or change, existing ARQ engines or base station context in the event of control message reception failures at the mobile station. According to exemplary embodiments of the present invention, a mobile station, in response to a reassignment message from a base station which instructs the mobile station to tune to another channel, transmits a confirmation message to the base station on the same channel on which the reassignment message was sent. As a result, reception of a reassignment message can be verified prior to the mobile station actually tuning to the other channel.

### BRIEF DESCRIPTION OF THE DRAWINGS

The above objects and features of the present invention will be more apparent from the following description of the preferred embodiments with reference to the accompanying drawings, wherein:
Figure 1 schematically illustrates pluralities of Layer 3 messages, Layer 2 frames, and Layer 1 channel bursts, or time slots;
Figure 2(a) shows a forward DCCH configured as a succession of time slots included in the consecutive time slots sent on a carrier frequency;
Figure 2(b) shows an example of an IS-136 DCCH field slot format;
Figure 3 illustrates a protocol architecture for communicating across an air link;
Figure 4 illustrates a conventional channel reassignment procedure under the IS 136 Packet Data MAC Specification for a mobile terminated data transaction;
Figure 5 is a block diagram of an exemplary cellular mobile radiotelephone system, including an exemplary base station and mobile station;
Figure 6 illustrates the reassignment handshake procedure of the present invention as implemented in an exemplary mobile terminated data transaction; and
Figure 7 illustrates the reassignment handshake procedure of the present invention as implemented in an exemplary mobile originated data transaction.

### DETAILED DESCRIPTION

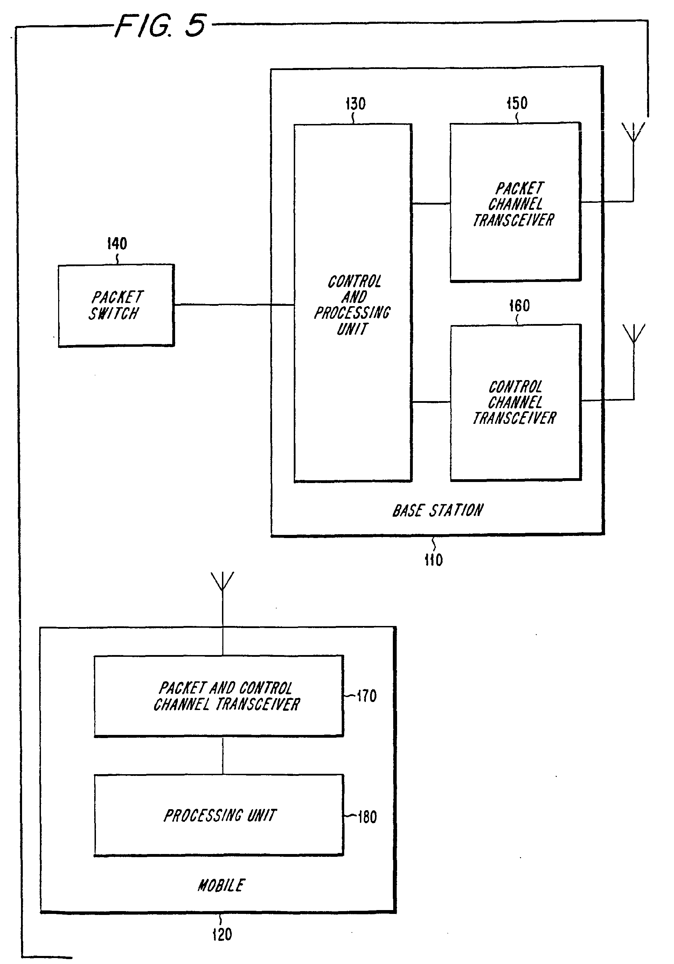

Figure 5 illustrates an exemplary cellular mobile radiotelephone system, including an exemplary base station 110 and mobile station 120. The exemplary base station includes a control and processing unit 130 which is connected to a packet switch 140 which in turn is connected to, for example, the Internet and/or an intranet (not shown). General aspects of such cellular radiotelephone systems are known in the art, as described by the above-cited U.S. patent applications and by U.S. Patent No. 5,175,867 to Wejke et al., entitled "Neighbor-Assisted Handoff in a Cellular Communication System," and U.S. Patent Application No. 07/967,027 entitled "Multi-mode Signal Processing," which was filed on October 27, 1992.

The exemplary base station 110 handles one or more packet traffic channels through a packet channel transceiver 150, which is controlled by the control and processing unit 130. Also, each base station includes a control channel transceiver 160, which may be capable of handling more than one packet control channel. The control channel transceiver 160 is controlled by the control and processing unit 130. The control channel transceiver 160 broadcasts control information over the control channel of the base station or cell to mobiles locked to that control channel. It will be understood that the transceivers 150 and 160 can be implemented as a single device, like the packet and control transceiver 170, for use with DCCHs and DTCs that share the same radio carrier frequency. It will be further appreciated that the base station 110 would also include one or more transceivers for handling voice channels.

The mobile station 120 receives packet data and broadcast and paging information at its packet and control channel transceiver 170. The mobile station may additionally include one or more separate transceivers (not shown) for handling voice communications. One skilled in the art will appreciate that the voice transceiver and the packet data transceiver could, in the alternative, be implemented as a single unit. The processing unit 180 controls the transceiver 170 and evaluates/processes the received information.

As indicated above with respect to Figure 4, the current IS 136 Packet Data MAC Specification does not specify the verification of a mobile station's reception of Channel Reassignment messages prior to the mobile station tuning to the new channel. As set forth in detail above, delays in mobile originated data transfers and mobile terminated data transfers can occur when a mobile station has not received a Channel Reassignment message. In the case of mobile terminated data transfers, the base station will transfer data on the wrong channel (i.e., the base station will transmit data on the new channel as the mobile station is still tuned to the old channel), requiring, for example, retransmission of the Channel Reassignment message.

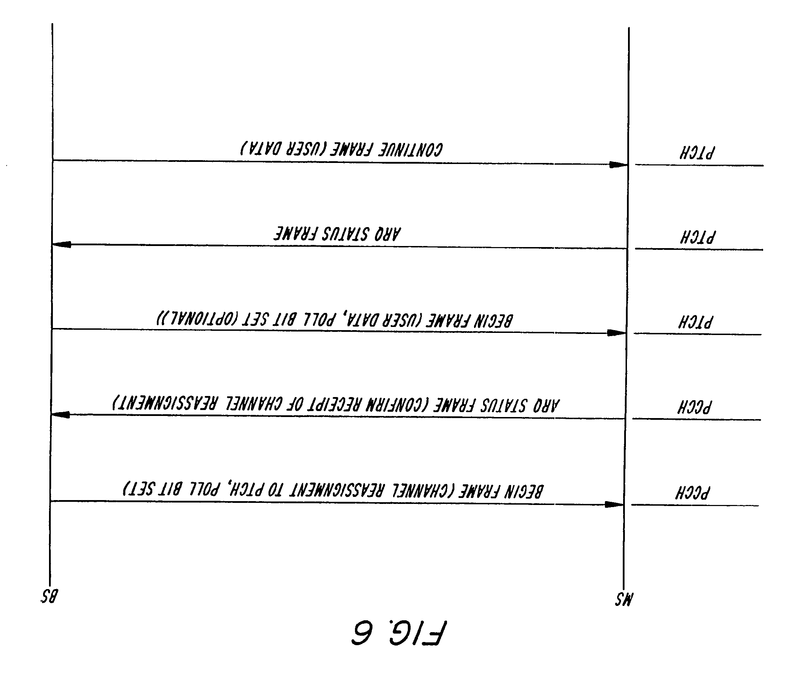

In order to avoid the above-described delays, the present invention provides a method for allowing the base station to confirm the reception of the Channel Reassignment message prior to changing the current MAC entity configuration. Figure 6 illustrates the reassignment handshake procedure, according to a first embodiment of the present invention, as implemented in an exemplary mobile terminated data transaction. In Figure 6, the base station transmits a first Begin frame, which includes a Channel Reassignment message, to the mobile station, which is tuned to a PCCH, in order to instruct the mobile station to tune to a new channel (e.g., a PTCH). In the Begin frame, the poll bit is set to request the mobile station to confirm receipt of the Channel Reassignment message. In response, the mobile station transfers on the PCCH an ARQ Status frame to indicate that the Channel Reassignment has been received. The mobile station then tunes to the new channel (i.e., the PTCH). The base station transmits a second Begin frame, which includes user data and may include a set poll bit, to the mobile station on the new channel (i.e., the PTCH). The mobile station, in response to the receipt of the second Begin frame, transmits an ARQ Status frame if the poll bit was set, which confirms the mobile station's presence on the new PTCH. The base station then sends additional user data in continue frames to the mobile station over the new channel (i.e. the PTCH).

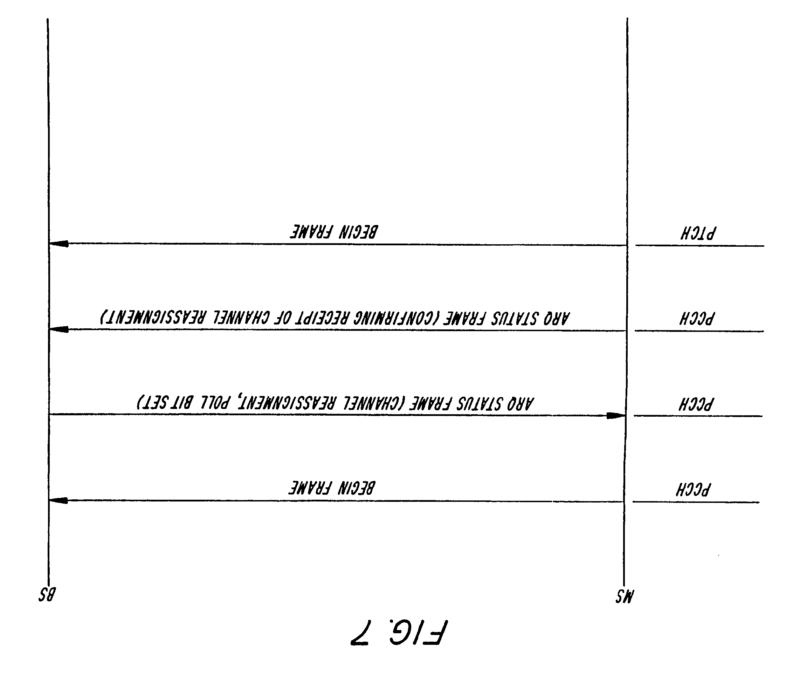

One skilled in the art will appreciate that the above-described handshake procedure applies equally well to a mobile originated data transaction. Figure 7 illustrates the reassignment handshake procedure, according to a second embodiment of the present invention, as implemented in an exemplary mobile originated data transaction. In Figure 7, the mobile station transmits on the PCCH a first Begin frame with user data to the base station to request a channel reservation. The base station transmits an ARQ Status frame, which includes a Channel Reassignment message and a set poll bit, to the mobile station indicating that the mobile station is to tune to a new channel (for this example, the PTCH) and that the mobile station is to confirm receipt of the Channel Reassignment message. In response, the mobile station confirms receipt of the message by means of a transmitted ARQ Status frame and tunes to the new channel (i.e., the PTCH). The mobile station then transmits a second Begin frame on this new channel.

As is evident from the above-described embodiments, the reassignment handshake utilizes the Poll Indication bit in a downlink PDU and the reassignment message embedded in the PDU. One skilled in the art will appreciate that the specific type of PDU that is employed is not critical and that many types of PDU may be employed without departing from the spirit and scope of the invention. Upon reception of an ARQ Status frame from the mobile station on the same channel on which the Channel Reassignment was sent (i.e., the old channel), the handshake procedure is completed.

In the mobile originating case, after the handshake procedure is complete, the base station may schedule the mobile station for uplink resources on the new channel in the next uplink transmission occasion. However, one skilled in the art will appreciate that the uplink scheduling decision shall be based on overall end user latency expectations as well as effective bandwidth utilization.

By implementing the reassignment handshake procedure of the present invention, the base station has the ability to avoid cumbersome situations with very long latency perceived by the end user in those situations where the mobile station does not receive the Channel Reassignment message.

The foregoing has described the principles, preferred embodiments and modes of operation of the present invention. However, the invention should not be construed as being limited to the particular embodiments discussed above. Thus, the above-described embodiments should be regarded as illustrative rather than restrictive, and it should be appreciated that variations may be made in those embodiments by workers skilled in the art without departing from the scope of the present invention as defined by the following claims.

## Claims

1. A method for communicating packet data between a base station (110) and a mobile station (120), said method comprising the steps of:
said base station (110) transmitting, on a first channel, a reassignment message indicating that said mobile station (120) is to tune to a second channel, wherein said reassignment message is transmitted in response to either, a request by said mobile station (120) for a packet data transaction, or a step of initiating a mobile terminated data transaction by said base station (110);
said mobile station (120) transmitting, on said first channel, a confirmation message indicating that said mobile station has received said reassignment message;
said mobile station (120) switching, after transmission of said confirmation message, to said second channel; and
said mobile station (120) or said base station (110) transmitting packet data on said second channel.

2. The method of claim 1 further comprising the step of:
setting a poll bit associated with the reassignment message,
wherein said step of transmitting the confirmation message occurs in response to a detection of said poll bit.

3. The method of claim 1 wherein said confirmation message is an Automatic Repeat Request Status frame.

4. The method of claim 1 wherein said first channel is a packet control channel and said second channel is a packet traffic channel.

5. The method of claim 1 wherein said first and second channels are packet control channels.

6. A system for communicating packet data, comprising a base station (110) and a mobile station (120),
said base station (110) having a first transceiver (160) for transmitting, on a first channel, a reassignment message indicating that said mobile station (120) is to tune to a second channel, where said reassignment message is transmitted in response to either, a request by said mobile station (120) for a packet data transaction, or an initiation of a mobile terminated data transaction by said base station (110),
said mobile station (120) having a second transceiver (170) for transmitting, on said first channel, a confirmation message indicating that said mobile station has received said reassignment message,
said mobile station (120) comprising means for switching said second transceiver, after transmission of said confirmation message, to said second channel, and
at least one of said base station and said mobile station having a third transceiver (150; 170) for transmitting data on said second channel, said third transceiver being either, one of the first or the second transceiver (160; 170), or a separate transceiver.

7. The system of claim 6 wherein said second transceiver for transmitting said confirmation message is arranged to transmit said confirmation message in response to detection of a poll bit of said reassignment message.

8. The system of claim 6 wherein said confirmation message is an Automatic Repeat Request Status frame.

9. The system of claim 6 wherein said first channel is a packet control channel and said second channel is a packet traffic channel.

10. The system of claim 6 wherein said first and second channels are packet control channels.

## Patentansprüche

1. Verfahren zum Kommunizieren von Paketdaten zwischen einer Basisstation (110) und einer Mobilstation (120), das Verfahren die folgenden Schritte umfassend:
Übertragen, durch die Basisstation (110), einer Wiederzuweisungsnachricht in einem ersten Kanal, die angibt, dass die Mobilstation (120) auf einen zweiten Kanal abzustimmen hat, wobei die Wiederzuweisungsnachricht als Reaktion auf entweder eine Anforderung einer Paketdaten-Transaktion durch die Mobilstation (120) oder einen Schritt zum Einleiten einer an die Mobilstation gerichtete eingehende Datentransaktion durch die Basisstation (110) übertragen wird;
Übertragen, durch die Mobilstation (120), einer Bestätigungsnachricht in dem ersten Kanal, die angibt, dass die Mobilstation die Wiederzuweisungsnachricht empfangen hat;
Umschalten, durch die Mobilstation (120), nach der Übertragung der Bestätigungsnachricht auf den zweiten Kanal; und
Übertragen, durch die Mobilstation (120) oder die Basisstation (110), von Paketdaten in dem zweiten Kanal.

2. Verfahren nach Anspruch 1, weiter den folgenden Schritt umfassend:
Setzen eines Sendeabrufbits, der mit der Wiederzuweisungsnachricht assoziiert ist,
wobei der Schritt zum Übertragen der Bestätigungsnachricht als Reaktion auf Detektion des Sendeabrufbits erfolgt.

3. Verfahren nach Anspruch 1, wobei die Bestätigungsnachricht ein Rahmen eines automatischen Wiederholungsanforderungsstatus ist.

4. Verfahren nach Anspruch 1, wobei der erste Kanal ein Paketsteuerungskanal und der zweite Kanal ein Paketverkehrskanal ist.

5. Verfahren nach Anspruch 1, wobei die ersten und zweiten Kanäle Paketsteuerungskanäle sind.

6. System zum Kommunizieren von Paketdaten, umfassend eine Basisstation (110) und eine Mobilstation (120),
wobei die Basisstation (110) einen ersten Transceiver (160) zum Übertragen einer Wiederzuweisungsnachricht in einem ersten Kanal aufweist, die angibt, dass die Mobilstation (120) auf einen zweiten Kanal abzustimmen hat, wobei die Wiederzuweisungsnachricht als Reaktion auf entweder eine Anforderung einer Paketdaten-Transaktion durch die Mobilstation (120) oder eine Einleitung einer an die Mobilstation gerichtete eingehende Datentransaktion durch die Basisstation (110) übertragen wird,
wobei die Mobilstation (120) einen zweiten Transceiver (170) zum Übertragen einer Bestätigungsnachricht in dem ersten Kanal aufweist, die angibt, dass die Mobilstation die Wiederzuweisungsnachricht empfangen hat,
die Mobilstation (120) umfassend Mittel zum Umschalten des zweiten Transceivers nach der Übertragung der Bestätigungsnachricht auf den zweiten Kanal, und
wobei mindestens eine der Basisstation und der Mobilstation einen dritten Transceiver (150; 170) zum Übertragen von Daten in dem zweiten Kanal aufweist, wobei der dritte Transceiver entweder einer des ersten oder zweiten Transceivers (160; 170) oder ein separater Transceiver ist.

7. System nach Anspruch 6, wobei der zweite Transceiver zum Übertragen der Bestätigungsnachricht angeordnet ist, um die Bestätigungsnachricht als Reaktion auf Detektion eines Sendeabrufbits der Wiederzuweisungsnachricht zu übertragen.

8. System nach Anspruch 6, wobei die Bestätigungsnachricht ein Rahmen eines automatischen Wiederholungsanforderungsstatus ist.

9. System nach Anspruch 6, wobei der erste Kanal ein Paketsteuerungskanal und der zweite Kanal ein Paketverkehrskanal ist.

10. System nach Anspruch 6, wobei die ersten und zweiten Kanäle Paketsteuerungskanäle sind.

## Revendications

1. Procédé destiné à communiquer des données en paquets entre une station de base (110) et une station mobile (120), ledit procédé comportant les étapes de :
transmission par ladite station de base (110), sur un premier canal, d'un message de réaffectation indiquant que ladite station mobile (120) est en passe de s'accorder sur un second canal, dans lequel ledit message de réaffectation est transmis en réponse à, soit une demande émise par ladite station mobile (120) concernant une transaction de données en paquets, soit une étape consistant à initier une transaction de données à destination d'un mobile par ladite station de base (110) ;
transmission par ladite station mobile (120), sur ledit premier canal, d'un message de confirmation indiquant que ladite station mobile a reçu ledit message de réaffectation ;
commutation par ladite station mobile (120), à l'issue de la transmission dudit message de confirmation, vers ledit second canal ; et
transmission par ladite station mobile (120) ou ladite station de base (110) des données en paquets sur ledit second canal.

2. Procédé selon la revendication 1, comprenant en outre l'étape ci-dessous consistant à :
définir un bit d'interrogation associé au message de réaffectation ;
dans lequel ladite étape de transmission du message de confirmation est occasionnée en réponse à une détection dudit bit d'interrogation.

3. Procédé selon la revendication 1, dans lequel ledit message de confirmation est une trame d'état de demande de répétition automatique.

4. Procédé selon la revendication 1, dans lequel ledit premier canal est un canal de commande de paquets et ledit second canal est un canal de trafic de paquets.

5. Procédé selon la revendication 1, dans lequel lesdits premier et second canaux sont des canaux de commande de paquets.

6. Système destiné à communiquer des données en paquets, comprenant une station de base (110) et une station mobile (120) ;
ladite station de base (110) présentant un premier émetteur-récepteur (160) pour transmettre, sur un premier canal, un message de réaffectation indiquant que ladite station mobile (120) est en passe de s'accorder sur un second canal, dans lequel ledit message de réaffectation est transmis en réponse à, soit une demande émise par ladite station mobile (120) concernant une transaction de données en paquets, soit une initiation d'une transaction de données à destination d'un mobile par ladite station de base (110) ;
ladite station mobile (120) présentant un second émetteur-récepteur (170) destiné à transmettre, sur ledit premier canal, un message de confirmation indiquant que ladite station mobile a reçu ledit message de réaffectation ;
ladite station mobile (120) comprenant un moyen pour commuter ledit second émetteur-récepteur, à l'issue de la transmission dudit message de confirmation, vers ledit second canal ; et
au moins l'une parmi ladite station de base et ladite station mobile présentant un troisième émetteur-récepteur (150 ; 170) destiné à transmettre des données sur ledit second canal, ledit troisième émetteur-récepteur étant soit l'un parmi le premier ou le second émetteur-récepteur (160 ; 170), soit un émetteur-récepteur distinct.

7. Système selon la revendication 6, dans lequel ledit second émetteur-récepteur destiné à transmettre ledit message de confirmation est agencé pour transmettre ledit message de confirmation en réponse à la détection d'un bit d'interrogation dudit message de réaffectation.

8. Système selon la revendication 6, dans lequel ledit message de confirmation est une trame d'état de demande de répétition automatique.

9. Système selon la revendication 6, dans lequel ledit premier canal est un canal de commande de paquets et ledit second canal est un canal de trafic de paquets.

10. Système selon la revendication 6, dans lequel lesdits premier et second canaux sont des canaux de commande de paquets.
